# FASCICULE DE BREVET EUROPEEN

(11) **EP 3 096 471 B1**
(45) Date de publication et mention de la délivrance du brevet: **03.07.2019**
(21) Numéro de dépôt: 16170433.3
(22) Date de dépôt: 19.05.2016
(51) Int. Cl.: H04B 10/272, H04B 10/40

(54) **ADAPTATEUR DE TYPE UNITÉ DE RÉSEAU OPTIQUE ONU POUR LE COUPLAGE D'UN ÉQUIPEMENT FORMANT UNE PASSERELLE DOMESTIQUE AVEC UNE FIBRE D'UN RÉSEAU OPTIQUE DE TYPE POINT-MULTIPOINT PASSIF PON**
ADAPTER VOM TYP OPTISCHE NETZEINHEIT (ONU) ZUM ERSTELLEN EINER AUSRÜSTUNG, DIE EINE SCHNITTSTELLE IM PRIVATEN HAUSHALT MIT EINER FASER EINES OPTISCHEN NETZES VOM TYP PASSIVE PUNKT-ZU-MULTIPUNKT-VERBINDUNG (PON) BILDET
ADAPTER SUCH AS AN OPTICAL NETWORK UNIT ONU FOR COUPLING A HOME GATEWAY DEVICE WITH A FIBRE OF A PASSIVE POINT-TO-MULTIPOINT OPTICAL NETWORK PON

(30) Priorité: 21.05.2015 FR 1554542
(43) Date de publication de la demande: 23.11.2016
(73) Titulaire: Freebox, 75008 Paris (FR)
(72) Inventeur: CALLANQUIN, François, 75015 Paris (FR)
(74) Mandataire: Dupuis-Latour, Dominique

(56) Documents cités:
- EP-A2- 2 421 280
- US-A1- 2013 183 038

## Description

L'invention concerne les équipements domestiques de type "box Internet" reliés au réseau d'un fournisseur d'accès Internet (FAI) et jouant un rôle de passerelle entre le réseau du FAI et divers appareils domestiques reliés directement au boitier de l'équipement, ou indirectement par le biais d'un réseau local filaire ou sans fil.

Un exemple de tel équipement est celui distribué par l'opérateur *Free,* Paris, France, sous la dénomination *Freebox Révolution,* plus précisément le boitier *Freebox Server* qui est un boitier d'interfaçage multifonction comprenant un modem xDSL/FTTH couplé par une liaison filaire ou optique au réseau du FAI et mettant en oeuvre des fonctions de téléphonie fixe, de routeur de réseau IP local (par un réseau filaire Ethernet LAN ou sans fil *WiFi*)*,* de stockage en réseau (NAS) et de téléphonie mobile (par exemple à l'aide d'une technologie de type *femtocell*)*.*

L'invention concerne plus précisément le cas où un tel appareil (ci-après "équipement" ou "équipement client") doit être couplé à une fibre optique d'un réseau de type réseau optique passif PON (*Passive Optical Network*), c'est-à-dire de type point-multipoint.

À la différence d'un réseau optique actif AON (*Active Optical Network*) qui est de type point-à-point, dans un réseau PON la partie terminale du réseau utilise une fibre partagée par plusieurs abonnés clients, et véhicule donc une pluralité de signaux multiplexés ensemble sur un même support. Au niveau de l'équipement client terminal, il est donc nécessaire non seulement d'assurer la conversion optique/électrique mais aussi d'effectuer sur les trames de données échangées un certain nombre d'opérations d'analyse, de sélection, de multiplexage/démultiplexage, etc. afin, en réception, d'extraire les trames destinées au seul équipement client concerné et, en émission, d'insérer les trames à émettre dans le flux de données qui peut déjà comprendre des trames émises par des équipements installés chez d'autres abonnés.

Ces opérations, qui sont la conséquence nécessaire de la topologie point-multipoint d'un réseau PON, sont habituellement réalisées au sein d'un adaptateur intermédiaire, dénommé ONU (*Optical Network Unit*), intercalé entre la terminaison de la fibre PON et l'équipement proprement dit.

Comme on le décrira plus en détail par la suite, cet adaptateur se présente habituellement sous la forme d'un boitier séparé, à installer non loin de l'équipement, muni d'un port optique recevant la terminaison de fibre et d'un port Ethernet relié par un câble à une prise dédiée de l'équipement de type Ethernet WAN, c'est-à-dire une prise pour l'interfaçage de l'équipement à un réseau étendu (en l'espèce, le réseau du FAI) par le biais d'une connexion standard filaire de type Ethernet configurée pour mettre en oeuvre les protocoles spécifiques à une utilisation WAN (codage, débit, etc.).

Ce boitier ONU est le plus souvent encombrant et relativement coûteux du fait de la présence de nombreux circuits de traitement et de conversion des signaux, de la connectique nécessaire (câbles, prises pour la liaison Ethernet) et de son alimentation électrique, nécessitant un bloc-prise propre. Il nécessite en outre que l'équipement dispose d'un port Ethernet WAN dédié, disponible.

L'invention vise le cas particulier où l'équipement n'est pas muni d'un port Ethernet WAN utilisable à cet effet, donc pour lequel la solution d'un boitier adaptateur ONU tel que décrit ci-dessus n'est pas applicable.

Ce cas peut recouvrir plusieurs situations, en particulier :
- l'équipement est un équipement préexistant ne disposant pas nativement de port Ethernet WAN (c'est par exemple le cas de la *Freebox Server*) ; et/ou
- l'équipement dispose de ports Ethernet LAN reconfigurables en Ethernet WAN, mais l'on ne souhaite pas procéder à une telle reconfiguration.

Cette dernière situation se présente par exemple dans le cas d'une *Freebox Server* installée chez un client abonné, qui est déjà utilisée avec une liaison filaire xDSL et pour laquelle on souhaite effectuer une migration vers une liaison optique en remplacement de la liaison xDSL. Cet équipement est muni de plusieurs ports Ethernet LAN et il est théoriquement possible de reconfigurer l'un des ports LAN en utilisation WAN via une mise à jour du logiciel interne (*firmware*) de l'équipement. Mais en pratique cette procédure est très risquée si elle est effectuée à distance car elle suppose d'intervenir sur des portions essentielles du *firmware,* qui sont programmées en usine et ne sont généralement pas modifiées, permettant d'assurer les fonctions de base de l'équipement notamment les fonctions d'amorçage lorsque l'équipement est mis sous tension. Si cette portion du *firmware* est mise à jour à distance et que cette mise à jour échoue pour une raison quelconque (erreur de transmission, coupure d'alimentation pendant la procédure, etc.) l'équipement se retrouvera inopérant, sans possibilité de restauration à distance de son logiciel. De plus, même en cas de succès, cette reconfiguration ferait perdre l'un des ports Ethernet LAN pour l'utilisation de l'équipement en tant que routeur du réseau local.

Le US 2013/0183038 A1 décrit un autre exemple d'adaptateur permettant d'interfacer un équipement domestique de type "box" avec un réseau optique PON, mais au prix de multiples conversions de signal qui rendent le dispositif peu performant et coûteux à mettre en oeuvre.

Le problème de l'invention est, dans un tel contexte, de proposer un adaptateur ONU permettant le couplage d'un tel équipement à un réseau PON, adaptateur qui ne nécessite pas l'utilisation d'un port Ethernet WAN sur l'équipement et qui, de plus, offre un encombrement, un coût et une consommation électrique réduits.

Il s'agit en particulier de pouvoir assurer, avec un parc d'équipements existant, une migration d'un réseau filaire xDSL vers un réseau en fibre optique sans obliger les abonnés à changer d'équipement, sans intervention d'un technicien sur place, et sans qu'il soit en aucune façon nécessaire d'apporter une quelconque modification à l'équipement existant.

À cet effet, l'invention propose un adaptateur du type divulgué par le US 2013/0183038 A1 précité correspondant au préambule de la revendication 1, et comportant les éléments particuliers énoncés dans la partie caractéristique de la revendication 1.

Les sous-revendications visent des modes de réalisation subsidiaires avantageux.

On va maintenant décrire un exemple de réalisation de l'invention, en référence aux dessins annexés où les mêmes références numériques désignent d'une figure à l'autre des éléments identiques ou fonctionnellement semblables.
La Figure 1 illustre de façon générale une topologie d'un réseau optique passif PON point-multipoint mettant en oeuvre une fibre partagée.
La Figure 2 illustre de façon plus détaillée la structure d'un adaptateur ONU intercalé entre la fibre partagée du réseau PON et l'équipement à raccorder, dans l'hypothèse où celui-ci dispose d'un port Ethernet WAN disponible.
La Figure 3 illustre une solution possible de boitier ONU pour le raccordement à une fibre d'un réseau PON d'un équipement ne disposant pas de port Ethernet WAN disponible.
La Figure 4 illustre la solution proposée par l'invention pour le raccordement à une fibre d'un réseau PON d'un équipement ne disposant pas de port Ethernet WAN disponible.

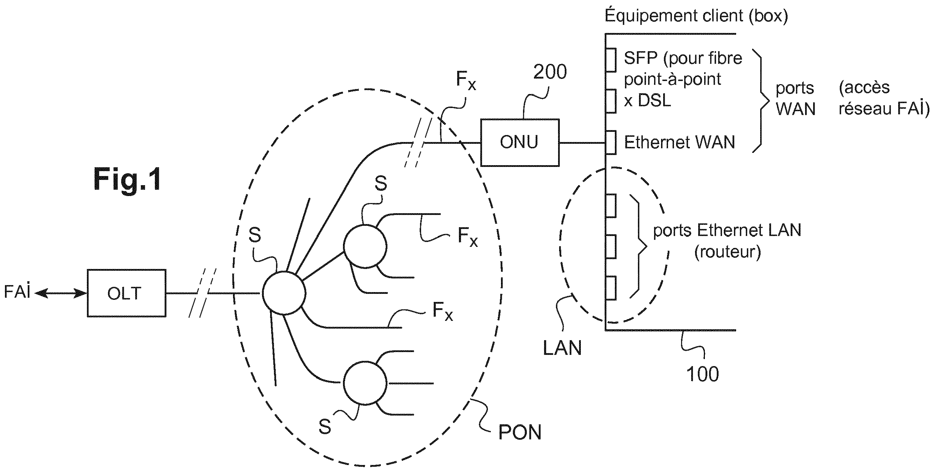

Sur la Figure 1, on a représenté de façon générale la topologie d'un réseau optique passif PON, qui assure la distribution des signaux entre un terminal de ligne optique OLT (*Optical Line Terminal*) du fournisseur d'accès Internet FAI et une pluralité d'équipements clients ou "boxes" 100 d'abonnés du FAI.

La particularité d'un réseau PON est d'être un réseau de type point-multipoint (OLT-équipements clients), avec une fibre unique partagée entre l'OLT de l'opérateur et un ou plusieurs coupleurs ou *splitters* S desservant les divers équipements clients par une fibre optique terminale Fₓ propre à chacun, entre le coupleur et l'équipement 100. Le coupleur S étant un dispositif purement passif, il divise le signal optique provenant de l'OLT, signal qui se retrouvera donc identiquement sur chacune des fibres Fₓ. De ce fait, chaque équipement 100 reçoit sur la fibre Fₓ à laquelle il est raccordé non seulement les données qui lui sont destinées, mais également celles qui sont destinées à d'autres équipements. Dans le sens inverse, le coupleur combine par addition les signaux optiques en provenance des équipements clients, de sorte que ces signaux doivent être émis depuis l'équipement à des instants permettant leur transmission sans risque de collisions entre eux. Il est donc nécessaire d'opérer au niveau de l'équipement un traitement, réalisé par un boitier adaptateur 200 dénommé unité de réseau optique ONU (*Optical Network Unit*), qui assure dans un sens le filtrage des données destinées au seul équipement 100 concerné et, dans le sens inverse, le multiplexage des données produites par l'équipement pour transmission à l'OLT dans un créneau temporel attribué à cet équipement.

L'équipement 100 est généralement muni d'un port optique de type "SFP" c'est-à-dire capable de recevoir un module convertisseur optique/électrique (utilisable pour le raccordement à un réseau en fibre optique point-à-point), d'un port xDSL (utilisable pour le raccordement à un réseau filaire "cuivre" sur ligne téléphonique) et éventuellement d'un port Ethernet WAN (utilisable pour le raccordement à un réseau filaire de type Ethernet).

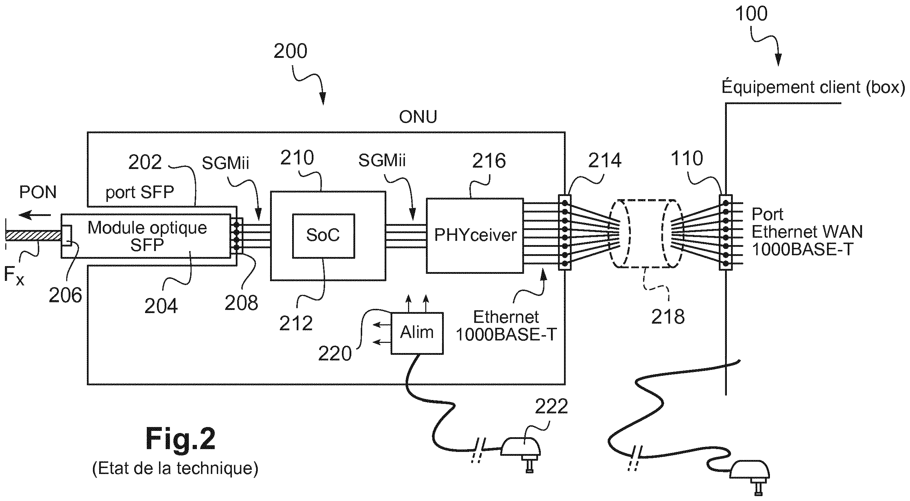

Outre ces différents ports qui permettent l'accès à un réseau WAN, c'est-à-dire l'accès au réseau du FAI, l'équipement 100 est doté de divers circuits pour la gestion des fonctions de téléphonie fixe, de stockage en réseau (NAS) etc. ainsi que divers moyens lui permettant de fonctionner en routeur d'un réseau local LAN, qui peut être un réseau sans fil de type WiFi et/ou un réseau filaire de type Ethernet LAN, les appareils étant alors branchés sur des ports Ethernet LAN prévus à cet effet sur l'équipement. La Figure 2 illustre plus précisément la structure typique d'une ONU 200 selon l'état de la technique, permettant de raccorder un équipement 100 à un réseau PON de type point-multipoint.

Cet adaptateur ONU 200 comprend, du côté de la fibre optique Fₓ, un port SFP 202, c'est-à-dire une "cage" ou un "slot" apte à recevoir un module 204 de type "module SFP optique", qui est un petit dispositif convertisseur optique/électrique enfichable (*Small Form-Factor Pluggable*) dont les dimensions, la connectique et les types de signaux en entrée et en sortie sont standardisés entre les divers fabricants. Il s'agit d'un dispositif de couche 1 du modèle OSI (couche physique), qui convertit les données à ce niveau, mais n'analyse pas ces données et ne les altère pas.

Du côté externe, apparent, le module SFP 204 comprend un port optique 206 accessible pour le couplage à la fibre optique Fₓ et, du côté interne opposé, un connecteur enfichable électrique 208 délivrant ou recevant des signaux électriques à un format MII (*Media-Independent Interface*), généralement un format SGMII (*Serial-Gigabit MII*), sur deux paires différentielles indépendantes pour l'émission et pour la réception en *full duplex.*

Ces signaux font l'objet d'une analyse et d'un traitement par un circuit 210 au niveau des couches supérieures du modèle OSI pour gérer la topologie point-multipoint (filtrage, multiplexage/démultiplexage, etc.) au niveau de l'équipement client. Ces différentes fonctions sont généralement réalisées par une puce dédiée 212 de type SoC (*System-on-a-Chip*)*,* qui incorpore tous les éléments de circuit nécessaires à l'échange, au traitement et au séquencement des signaux dans les deux sens. Le circuit 210 inclut également une mémoire EEPROM d'identification indiquant les performances d'émission/réception du module (débit des données, etc.), le standard d'interfaçage, le fabricant, etc.

Du côté de l'équipement 100, l'adaptateur ONU 200 comprend un connecteur 214 de type standardisé Ethernet, généralement de niveau Ethernet 1000BASE-T. L'interfaçage de ce connecteur avec le circuit 210, qui traite ou délivre des données au format SGMII, est assuré par un circuit de type "PHYceiver" 216, qui est un circuit comprenant une puce PHY opérant au niveau de la couche physique (couche 1) du modèle OSI, cette conversion étant opérée sans altération des données. Le connecteur 214 de l'adaptateur ONU 200 est relié par un câble Ethernet 218 à un port Ethernet WAN 110 de l'équipement 100.

Enfin, l'adaptateur ONU 200 est muni de sa propre alimentation électrique, avec un circuit d'alimentation 220 relié à un bloc-prise 222 enfichable sur une prise secteur.

Un tel adaptateur ONU présente plusieurs inconvénients : boitier encombrant, réalisation relativement complexe et coûteuse du fait des conversions multiples et de la présence de connecteurs, recours à un câble supplémentaire pour assurer la liaison Ethernet entre l'adaptateur et l'équipement, et prise d'alimentation secteur supplémentaire rajoutant à la complexité de l'installation.

En outre et surtout, un tel adaptateur implique de disposer sur l'équipement d'un port Ethernet WAN, ce qui n'est pas toujours le cas pour les raisons que l'on a exposées en introduction (le port n'existe pas sur l'équipement que l'on veut coupler au réseau optique, ou on ne souhaite pas reconfigurer un port Ethernet LAN en port Ethernet WAN).

L'invention vise précisément le cas d'un tel équipement ne comportant pas de port Ethernet WAN utilisable pour le couplage de l'équipement à un réseau optique.

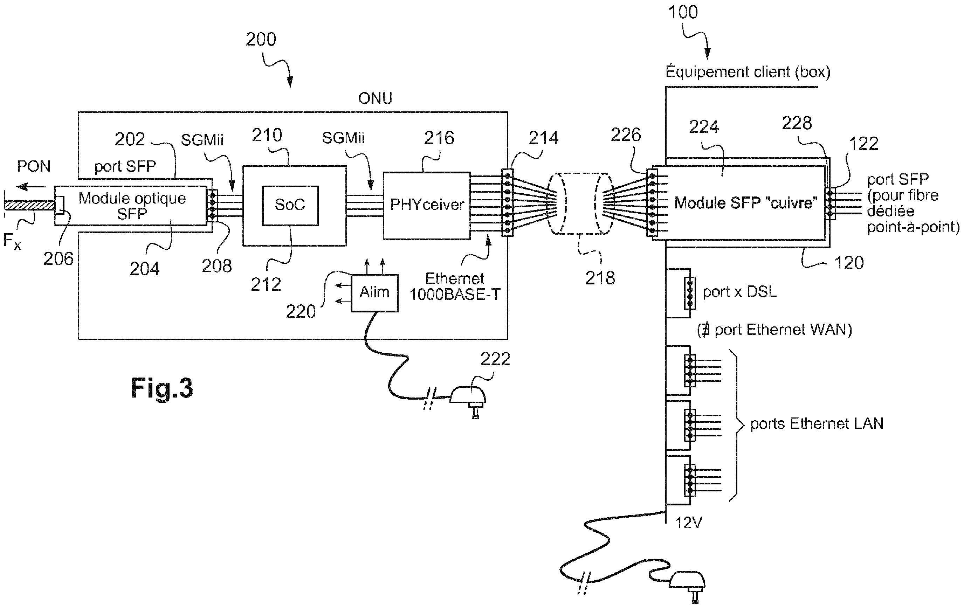

La Figure 3 illustre une solution possible à ce problème, solution qui est réalisable avec des moyens existants de l'état de la technique.

L'adaptateur ONU 200 est identique à celui décrit Figure 2, mais le câble Ethernet 218 est connecté non pas à un port Ethernet WAN de l'équipement 100, mais à un module SFP de type "cuivre" 224 enfiché dans un port SFP 120 de l'équipement 100 (un module SFP "cuivre" est un module comprenant les mêmes circuits qu'un module optique, mais avec en entrée, au lieu d'un port optique, un port électrique 226 au standard Ethernet).

Le port SFP 120 de l'équipement 100 est normalement destiné à recevoir un module SFP optique (identique au module 204 enfiché dans le port SFP 202 de l'adaptateur ONU 200) pour permettre le couplage de l'équipement à une fibre dédiée d'un réseau optique actif AON, c'est-à-dire avec une topologie de type point-à-point ne nécessitant pas d'adaptateur intercalaire de type ONU. Mais si l'on enfiche un SFP cuivre 224 dans ce port SFP 120, et que l'on branche le connecteur du câble 218 sur le port Ethernet 226 du module SFP cuivre 224, ce dernier assurera l'interfaçage entre les signaux reçus sur le connecteur Ethernet 226 et son connecteur de sortie 228 enfiché dans le connecteur électrique homologue 122 de l'équipement 100. Au niveau du connecteur 226, le module SFP cuivre 224 émulera ainsi un port Ethernet WAN via le port SFP 120 normalement destiné à assurer le couplage à un réseau optique.

Cette solution n'est toutefois pas réellement satisfaisante : non seulement, les inconvénients de l'adaptateur ONU 200 (qui n'est pas modifié) exposés ci-dessus demeurent, mais elle implique l'utilisation d'un élément supplémentaire, à savoir le module SFP cuivre 224, qui est un accessoire relativement coûteux.

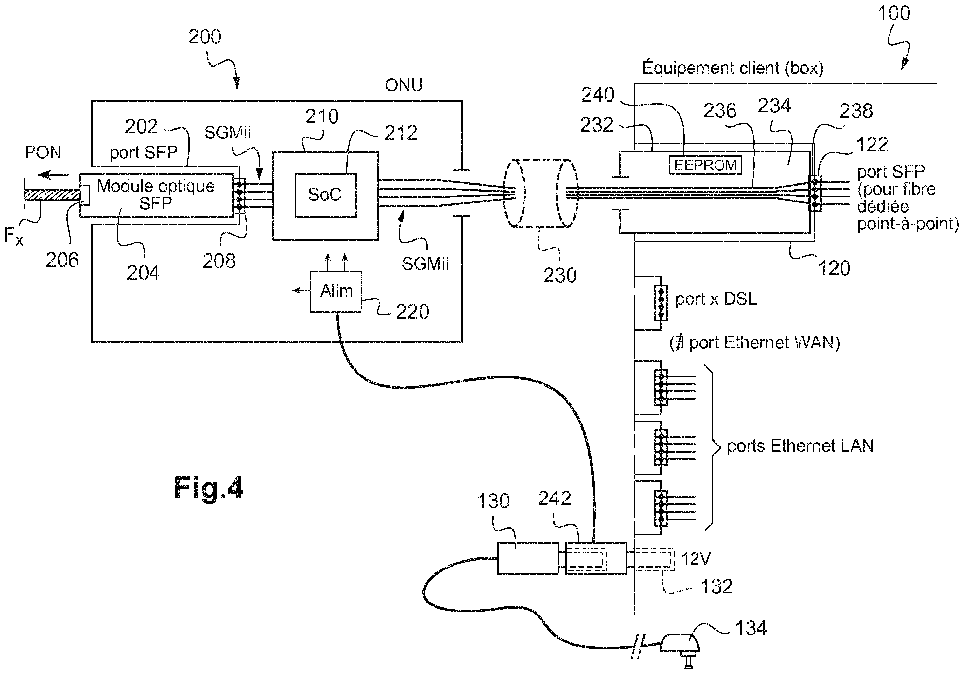

La Figure 4 illustre la solution de l'invention pour le couplage à un réseau optique d'un équipement ne comportant pas de port Ethernet WAN utilisable à cet effet.

L'invention propose une structure différente d'adaptateur PON qui évite la cascade de conversions nécessaire dans le cas de la solution de la Figure 3 et qui, avec une structure beaucoup plus simple, permet de réduire à la fois le coût et l'encombrement de l'adaptateur, cette solution selon l'invention n'impliquant en outre aucune modification à apporter à l'équipement 100.

Plus précisément, l'adaptateur ONU selon l'invention comprend, comme précédemment, un port SFP 202 recevant un module optique SFP 204 pourvu, d'un côté, d'un port optique 206 couplé à la fibre Fₓ, et, du côté opposé, d'un port électrique 208 recevant/émettant des signaux au format SGMII.

Ces signaux font l'objet d'un traitement par un circuit 210 du même type que le circuit 210 décrit à propos de la Figure 2.

En revanche, l'adaptateur ONU de l'invention ne comprend ni circuit PHYceiver 216 ni connecteur Ethernet 214. Les signaux délivrés par le circuit 210 ou appliqués à ce circuit sont échangés sur un câble 230 sortant du boitier de l'adaptateur 200 et aboutissant à un connecteur électrique 232 enfiché dans le port SFP 120 de l'équipement 100.

Ce connecteur 232 est avantageusement réalisé avec les mêmes dimensions et la même connectique que celle d'un module SFP, de manière à constituer un "SFP fantôme", n'ayant aucun rôle de conversion mais simplement compatible mécaniquement et électriquement avec un port SFP conventionnel 120 d'un équipement 100 pour pouvoir être enfiché dans ce port.

On dispose ainsi d'une liaison directe entre les bornes du circuit de traitement des données 210 de l'adaptateur ONU 200 et les bornes électriques du connecteur 122 du port SFP 120 de l'équipement 100. De fait, il n'est plus nécessaire d'opérer, comme dans le cas de la Figure 3, une double conversion SGMII/Ethernet (par le PHYceiver 216) et Ethernet/SGMII (par le module SFP cuivre 224) ni, comme dans le cas de la Figure 2, une conversion SGMII/Ethernet, et on évite également le recours à un câble de raccordement Ethernet 218, puisque dorénavant la liaison se fait directement entre le circuit 210 de l'adaptateur ONU 200 et le connecteur 122 de l'équipement 100.

Pour éviter des pertes de données qui auraient pu être engendrées du fait de dégradations de l'intégrité des signaux SGMII échangés entre l'adaptateur ONU 200 et l'équipement 100, le câble 230 est avantageusement un câble blindé spécifique, avec deux paires torsadées d'impédance différentielle 100 Ω, et 50 Ω par rapport à la masse, pour tenir compte du fait que les signaux SGMII sont référencés par rapport à la masse, à la différence d'un câble Ethernet.

D'autre part, pour que le "SFP fantôme" du connecteur 232 soit correctement détecté par l'équipement 100 lors de son insertion, le connecteur 232 inclut un circuit imprimé 234 portant, outre les pistes de liaison 236 au connecteur 238, une mémoire EEPROM 240 contenant les informations propres à la reconnaissance du connecteur 232 en tant que SFP. Certains paramètres correspondant à des caractéristiques physiques du SFP telles que type d'émetteur optique, vitesse maximale de transmission, etc. sont enregistrés dans la mémoire EEPROM. Au surplus, certains signaux physiques sont forcés à l'"état normal" pour que l'insertion du connecteur 232 dans le port SFP 120 puisse simuler l'insertion d'un vrai module optique SFP, permettant à l'équipement 100 de s'auto-configurer pour la réception de signaux issus d'un réseau optique via le port SFP 120.

Enfin, dans un but de simplification, le circuit d'alimentation 220 de l'adaptateur ONU 200 est avantageusement relié à une prise gigogne 242 intercalée entre la fiche d'alimentation en basse tension continue 130 de l'équipement client et la prise 132 de cet équipement normalement destinée à recevoir la fiche 130. Compte tenu de la faible consommation électrique de l'adaptateur 200 selon l'invention, il est en effet possible de l'alimenter au moyen d'un unique bloc-prise 134, à savoir le bloc-prise normalement destiné à alimenter l'équipement 100.

## Revendications

1. Un adaptateur (200) de type unité de réseau optique, ONU, pour le couplage entre :
- une fibre optique (Fₓ) d'un réseau optique à fibre partagée de type point-multipoint passif, PON ; et
- un équipement réseau (100) formant passerelle domestique comprenant un port d'entrée/sortie (120) apte à loger un module convertisseur optique enfichable, pour le couplage de l'équipement à une fibre optique dédiée d'un réseau optique de type point-à-point actif, AON,
ledit adaptateur de couplage de ladite fibre optique audit équipement étant **caractérisé en ce qu'**il comprend :
- côté fibre optique, un port d'entrée/sortie (202) avec un module convertisseur optique (204) enfichable,
ce module convertisseur optique (204) étant apte, d'une part, à être couplé à ladite fibre optique (Fₓ) dudit réseau PON et comportant, d'autre part, des bornes électriques d'entrée/sortie (208) connectées audit module convertisseur optique enfichable (204) pour recevoir de celui-ci des signaux bidirectionnels échangés selon un standard de type interfaçage indépendant du support, MII ;
- côté équipement, un connecteur électrique enfichable (232) configuré selon un format mécaniquement et électriquement compatible avec ledit port d'entrée/sortie (120) dudit équipement, de manière à permettre son couplage audit port d'entrée/sortie ; et
- un circuit (210) de multiplexage/démultiplexage et de gestion desdits signaux bidirectionnels, couplé d'une part en MII au module convertisseur optique, et d'autre part directement relié, également en MII, au connecteur électrique enfichable.

2. L'adaptateur de la revendication 1, dans lequel le connecteur électrique enfichable (232) comprend en outre un circuit apte à forcer des paramètres du niveau de couche physique à des valeurs prédéterminées.

3. L'adaptateur de la revendication 2, dans lequel lesdites valeurs prédéterminées sont des valeurs permettant d'émuler un module convertisseur optique enfiché dans le port d'entrée/sortie (120) de l'équipement..

4. L'adaptateur de la revendication 2, comprenant en outre une mémoire programmable (240) conservant lesdites valeurs prédéterminées des paramètres du niveau de couche physique.

5. L'adaptateur de la revendication 1, comprenant :
- un boitier, avec le port d'entrée/sortie (202) de l'adaptateur et le module convertisseur optique (204) enfiché dans ce port, ce boitier contenant également le circuit (210) de multiplexage/démultiplexage et de gestion des signaux bidirectionnels ; et
- un câble de liaison (230) reliant directement le boitier audit connecteur électrique enfichable (232).

6. L'adaptateur de la revendication 5, dans lequel le câble de liaison (230) est un câble blindé comprenant deux paires torsadées pour la transmission des signaux bidirectionnels, ces derniers étant référencés par rapport à une masse du câble.

7. L'adaptateur de la revendication 5, comprenant en outre un circuit d'alimentation (220) contenu dans le boitier, et un câble d'alimentation reliant ce circuit d'alimentation à une prise gigogne (242) adaptable en dérivation sur une fiche (130) d'alimentation basse tension de l'équipement.

## Patentansprüche

1. Adapter (200) vom Typ optische Netzeinheit, ONU, für die Kopplung zwischen:
- einer optischen Faser (Fx) eines optischen Netzes mit gemeinsam genutzter Faser vom Typ passive Punkt-zu-Multipunkt-Verbindung, PON; und
- einer Netzausrüstung (100), die ein Home-Gateway bildet und einen Eingangs-/Ausgangsport (120) umfasst, der für die Aufnahme eines einsteckbaren optischen Wandlermoduls eingerichtet ist, für die Kopplung der Ausrüstung mit einer dedizierten optischen Faser eines optischen Netzes vom Typ aktive Punkt-zu-Punkt-Verbindung, AON,
wobei der Adapter für die Kopplung der optischen Faser mit der Ausrüstung **dadurch gekennzeichnet ist, dass** er Folgendes umfasst:
- auf der Seite der optischen Faser einen Eingangs-/Ausgangsport (202) mit einem einsteckbaren optischen Wandlermodul (204),
wobei dieses optische Wandlermodul (204) einerseits für die Verbindung mit der optischen Faser (Fx) des PON-Netzes eingerichtet ist und andererseits elektrische Eingangs-/Ausgangsklemmen (208) aufweist, die mit dem einsteckbaren optischen Wandlermodul (204) verbunden sind, um von diesem bidirektionale Signale zu empfangen, die gemäß einem Media Independent Interface-, MII-, Standard ausgetauscht werden;
- auf der Seite der Ausrüstung einen einsteckbaren elektrischen Steckverbinder (232), der gemäß einem Format ausgestaltet ist, das mit dem Eingangs-/Ausgangsport (120) der Ausrüstung mechanisch und elektrisch kompatibel ist, um seine Kopplung mit dem Eingangs-/Ausgangsport zu gestatten; und
- eine Multiplexer-/Demultiplexer- und Verwaltungs-Schaltung (210) für die bidirektionalen Signale, die einerseits in MII mit dem optischen Wandlermodul gekoppelt ist und anderseits, ebenfalls in MII, unmittelbar mit dem einsteckbaren elektrischen Steckverbinder verbunden ist.

2. Adapter nach Anspruch 1, wobei der einsteckbare elektrische Steckverbinder (232) ferner eine Schaltung umfasst, die dazu eingerichtet ist, die Parameter der physikalischen Schichtebene zwangsweise auf vorbestimmte Werte zu setzen.

3. Adapter nach Anspruch 2, wobei die vorbestimmten Werte Werte sind, die das Emulieren eines optischen Wandlermoduls gestatten, der in den Eingangs-/Ausgangsport (120) der Ausrüstung eingesteckt ist.

4. Adapter nach Anspruch 2, ferner umfassend einen programmierbaren Speicher (240), der die vorbestimmten Werte der Parameter der physikalischen Schichtebene aufbewahrt.

5. Adapter nach Anspruch 1, umfassend:
- ein Gehäuse, mit dem Eingangs-/Ausgangsport (202) des Adapters und dem in diesen Port eingesteckten optischen Wandlermodul (204), wobei dieses Gehäuse auch die Multiplexer-/Demultiplexer- und Verwaltungs-Schaltung (210) für die bidirektionalen Signale enthält; und
- ein Verbindungskabel (230), welches das Gehäuse unmittelbar mit dem einsteckbaren elektrischen Steckverbinder (232) verbindet.

6. Adapter nach Anspruch 5, wobei das Verbindungskabel (230) ein geschirmtes Kabel mit zwei verdrillten Adernpaaren für die Übertragung der bidirektionalen Signale ist, wobei diese letzten gegenüber einer Masse des Kabels referenziert sind.

7. Adapter nach Anspruch 5, ferner umfassend eine Versorgungsschaltung (220), die in dem Gehäuse enthalten ist, und ein Versorgungskabel, das diese Versorgungsschaltung mit einer Adapterbuchse (242) verbindet, die im Bypass an einen Niederspannungsversorgungsstecker (130) der Ausrüstung adaptierbar ist.

## Claims

1. An adapter (200) of the Optical Network Unit, ONU, type, for coupling between:
- an optical fiber (Fₓ) of a shared-fiber optical network of the passive point-multipoint, PON, type; and
- a network equipment (100) forming a household gateway comprising an input/output port (120) adapted to receive a pluggable optical converter module, for coupling the equipment to a dedicated optical fiber of an optical network of the active point-to-point, AON, type,
said adapter for coupling said optical fiber to said equipment being **characterized in that** it comprises:
- on the optical fiber side, an input/output port (202) with a pluggable optical converter module (204),
said optical converter module (204) being adapted, on the one hand, to be coupled to said optical fiber (Fₓ) of said PON network and including, on the other hand, input/output electrical terminals (208) connected to said pluggable optical converter module (204) to receive therefrom bidirectional signals exchanged in a Media Independent Interfacing, Mil, standard;
- on the equipment side, a pluggable electrical connector (232) configured in a format that is mechanically and electrically compatible with said input / output port (120) of said equipment, so as to allow the coupling thereof to said input/output port; and
- a circuit (210) for multiplexing/demultiplexing and managing said bidirectional signals, coupled, on the one hand, in MII to the optical converter module and, on the other hand, directly connected, also in Mil, to the pluggable electrical connector.

2. The adapter of claim 1, wherein the pluggable electrical connector (232) further comprises a circuit adapted to force parameters of the physical layer level to predetermined values.

3. The adapter of claim 2, wherein said predetermined values are values enabling to emulate an optical converter module plugged into the input/output port (120) of the equipment.

4. The adapter of claim 2, further comprising a programmable memory (240) storing said predetermined values of the physical layer level parameters.

5. The adapter of claim 1, comprising:
- a casing, with the input/output port (202) of the adapter and the optical converter module (204) plugged into this port, said casing also containing the circuit (210) for multiplexing/demultiplexing and managing the bidirectional signals; and
- a connection cable (230) directly connecting the casing to said pluggable electrical connector (232).

6. The adapter of claim 5, wherein the connection cable (230) is shielded cable comprising two twisted pairs for the transmission of the bidirectional signals, said signals being referenced with respect to a ground of the cable.

7. The adapter of claim 5, further comprising a power supply circuit (220) contained in the casing, and a power supply cable connecting this power supply circuit to an integrated electrical socket (242) that us adaptable in bypass connection to a low voltage power supply plug (130) of the equipment.
